# NEUE EUROPÄISCHE PATENTSCHRIFT

(11) **EP 1 952 103 B2**
(45) Veröffentlichungstag und Bekanntmachung des Hinweises auf die Entscheidung über den Einspruch: **26.12.2018**
(45) Hinweis auf die Patenterteilung: 04.03.2015
(21) Anmeldenummer: 06828541.0
(22) Anmeldetag: 20.11.2006
(51) Int. Cl.: G01G 11/04

(54) **VERFAHREN ZUM WIEGEN MIT MEHREREN WÄGEZELLEN**
METHOD FOR WEIGHING WITH A NUMBER OF WEIGHING CELLS
PROCEDE DE PESAGE COMPRENANT PLUSIEURS CELLULES DE PESAGE

(30) Priorität: 21.11.2005 DE 102005055755
(43) Veröffentlichungstag der Anmeldung: 06.08.2008
(73) Patentinhaber: WIPOTEC GmbH, 67657 Kaiserslautern (DE)
(72) Erfinder: DÜPPRE, Theo, 67663 Kaiserslautern (DE)
(74) Vertreter: Mischung, Ralf
(86) Internationale Anmeldenummer: PCT/DE2006/002037
(87) Internationale Veröffentlichungsnummer: WO 2007/057001

(56) Entgegenhaltungen:
- EP-A1- 0 252 245
- CA-C- 1 299 981
- DE-T2- 69 317 852
- GB-A- 2 391 323
- JP-A- H0 618 318
- US-A- 4 868 951
- US-A- 5 326 938
- US-B1- 6 433 288

## Beschreibung

Die Erfindung betrifft ein Verfahren zum Wiegen gemäß dem Patentanspruch 1, sowie eine Vorrichtung zur Durchführung des Verfahrens gemäß dem Patentanspruch 4.

Derartige Verfahren und Vorrichtungen finden beispielsweise im Lebensmittelbereich Anwendung.

Beispielsweise werden Produkte wie Wurst, Käse mittels vollautomatischer Produktionslinien (sog. Sliser) geschnitten, selbsttätig gewogen und verpackt. Um hierbei Scheiben unterschiedlicher Durchmesser wiegen zu können, werden Waagen (mit sogenannten Wägezellen) mit Transportvorrichtungen unterschiedlicher Breite, beispielsweise schmal, mittel und dick verwendet, so dass derartige Produktionslinien speziell auf den jeweiligen Produktdurchmesser ausgelegt sind. Dies bedeutet nachteiligerweise einen hohen Aufwand, da mit herkömmlichen Wägevorrichtungen bzw. hiermit ausgestatteten Produktionslinien zum Wiegen von Produkten unterschiedlicher Breite zumindest das Transportsystem oder die gesamte Waage gewechselt werden muss oder mehrere Produktionslinien mit Waagen verschieden breiter Transportsysteme bereit gehalten werden müssen.

Der Erfindung liegt daher die Aufgabe zugrunde, ein Verfahren gemäß dem Patentanspruch 1, sowie eine Vorrichtung zur Durchführung des Verfahrens gemäß dem Patentanspruch 4 zu schaffen, welche das Wiegen von Objekten unterschiedlicher Abmessung ermöglichen und die vorgenannten Nachteile vermeiden.

Nach der Erfindung werden mehrere Wägezellen bzw. Wägemodule parallel, also nebeneinander (eventuell auch leicht versetzt) und im Wesentlichen quer zur Transportrichtung eines selbsttätig zu wiegenden bewegbaren oder bewegten Objektes angeordnet. Durch die Möglichkeit, die beim Wiegen entstehenden Wägesignale der mehreren Wägezellen je nach Bedarf miteinander zu koppeln, können vorteilhafterweise auch Objekte, welche aufgrund ihrer Abmessung auf zwei oder mehreren Wägezellen bzw. deren Wägeauflagen (für das Aufliegen des zu wiegenden Objekts) zu liegen kommen, gewogen werden, ohne dass für solche Objekte eine andere Wägevorrichtung bereit gehalten oder eine vorhandene Wägevorrichtung umgerüstet werden muss.

In bevorzugter Ausgestaltung der Erfindung wird in Abhängigkeit der Größe und Lage eines Objekts eine Auswahl der entstehenden Signale der jeweils erfassenden eigenständigen (d.h. nicht mechanisch und/oder signaltechnisch fest gekoppelte) Wägezellen bzw. Wägemodule (beispielsweise bestehend aus mehreren nicht eigenständigen Wägezellen) für das Koppeln getroffen. Beispielsweise können zwei oder mehrere benachbarte Wägezellen bzw. deren Ausgangssignal gekoppelt werden, um ein Objekt, welches aufgrund seiner Größe mehrere benachbarte Wägezellen bzw. deren vorzugsweise fluchtenden (bezüglich der Oberfläche) Wägeauflagen bzw. deren Wägeplattform überdeckt, korrekt zu wiegen. Vorzugsweise werden hierbei nicht in jedem Fall alle Ausgangssignale gekoppelt, so dass vorteilhafterweise ein gleichzeitiges (getrenntes) Wiegen zweier Objekte ermöglicht wird.

Die Auswahl kann in weiterer Ausgestaltung der Erfindung automatisch über einen als elektronische (inklusive mittels Software realisierte) Schaltung ausgebildeten Schalter erfolgen. Hierbei kann die Auswahl automatisch getroffen werden, indem die Größe und Lage des zu wiegenden Objekts mittels einer Sensoreinrichtung erfasst und die entsprechenden Wägezellen bzw. deren Signale beispielsweise durch entsprechende Ansteuerung des Auswahlschalters gekoppelt werden. Als Sensoreinrichtung kommen hierbei eine Vielzahl von optischen, mechanischen, elektronischen Möglichkeiten, wie beispielsweise einfache Lichtschranke zwischen benachbarten Wägezellen bzw. deren Wägeauflagen, Bilderfassung mittels einer Kamera und Auswerteeinrichtung, elektromechanische Erfassung durch Kontakte, Betätigungselemente etc., in Frage. Hierbei kann die Sensoreinrichtung ein unmittelbares Bestandteil der Wägevorrichtung sein. Weiterhin kann die Auswahl automatisch auch in Abhängigkeit des dem zu wiegenden Produkt zugeordneten Datensatzes eines Produktdatenspeichers getroffen werden.

Da die Größe eines zu wiegenden Objekts direkt von der Größe eines Objektes vor dessen etwaiger Bearbeitung abhängt, ist es auch denkbar, die Sensoreinrichtung nicht unmittelbar an der Wägezelle bzw. einer mechanisch hiermit gekoppelten etwaigen als Transportvorrichtung ausgebildete Wägeauflage, sondern an einer Bearbeitungsvorrichtung anzuordnen, welche in der Produktionslinie und im Bearbeitungsvorgang vor dem Wiegen liegt. So ist es denkbar in einer Produktionslinie für Schneiden, Wiegen und Verpacken eines Objekts die Sensoreinrichtung an einer im Bearbeitungsvorgang vor dem Wiegen liegenden Schneidemaschine anzuordnen, beispielsweise direkt an einer einstellbaren Halterung für das zu schneidende Objekt, um die spätere Lage und Größe der abgeschnitten Elemente, beispielsweise Wurstscheiben, auf der Wägevorrichtung bzw. der hiermit gekoppelten Transportvorrichtung bereits im Vorfeld zu ermitteln.

In bevorzugter Ausgestaltung werden die Wägesignale bzw. die getroffene Auswahl der Wägesignale mittels einer Auswertevorrichtung gekoppelt. Die Auswerteeinrichtung kann hierbei extern angeordnet oder unmittelbarer Bestandteil der Wägevorrichtung, insbesondere der Wägezelle bzw. der darin beinhalteten Elektronik selbst sein. Die Kopplung der Signale kann durch geeignete Berechnungsverfahren, durch Aufsummieren, Integration etc. der analog oder digital vorliegenden Signale vor oder nach deren Weiterverarbeitung erfolgen, um ein korrektes Ergebnis zu erhalten.

Weitere vorteilhafte Ausgestaltungen der Erfindung ergeben sich aus den Unteransprüchen. Die Erfindung wird nachfolgend anhand in der Zeichnung dargestellten Ausführungsbeispiels näher erläutert. In der Zeichnung zeigt:

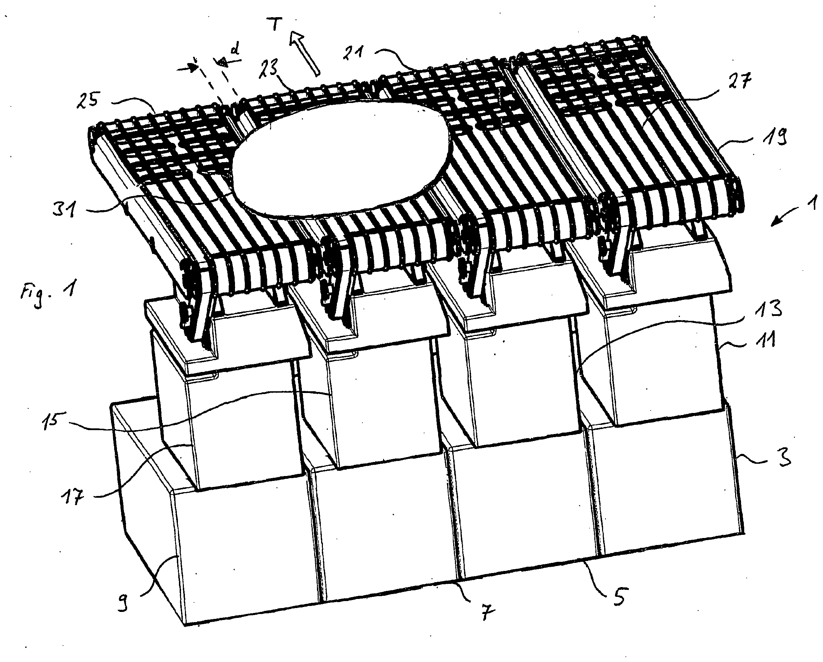

- Fig. 1: eine perspektivische Ansicht einer erfindungsgemäßen Wägevorrichtung in schematischer Darstellung.

Die in Fig. 1 dargestellte Wägevorrichtung 1, zeigt mehrere eigenständige, d.h. nicht fest miteinander gekoppelte (insbesondere ohne mechanisch unmittelbar gekoppelte Wägeauflage), Wägezellen 3, 5, 7 und 9 auf, welche beispielsweise als Wägemodule mit entsprechender Elektronik zum Ausgeben eines analogen oder digitalen Wägesignals ausgebildet sind. Diese Wägemodule 3, 5, 7 und 9 sind jeweils mechanisch mit als Transportvorrichtungen 11, 13, 15 und 17 ausgebildete Wägeauflagen (bzw. Wägeplatformen) gekoppelt, welche Fördermittel 19, 21, 23, 25 mit über Walzen in Transportrichtung T, vorzugsweise synchron angetriebene Riemen, Ketten, Gurten, Bändern oder ähnliches umfassen. Wie aus Fig. 1 ersichtlich, sind die Wägemodule 3, 5, 7, 9 in einer Reihe nebeneinander so angeordnet, dass sie quer zur Transportrichtung stehen und vorzugsweise eine (zueinander) fluchtende Oberfläche darstellen.

Weist nun ein zu wiegendes Objekt 31, beispielsweise eine Wurstscheibe, eine im Vergleich zu den seitlichen Abmessungen der Transportvorrichtungen 11, 13, 15 und 17 größere Abmessung auf, so kommt das Objekt 31 nicht nur auf einer über den Wägezellen 3, 5, 7, 9 angeordneten Transportvorrichtung 11, 13, 15, 17, sondern - wie im Beispiel dargestellt - auf mehreren, nämlich den Transportbändern 21, 23 und 25 zu liegen bzw. wird auf diesen in Richtung T transportiert. Um das Objekt 31 korrekt während des Transports zu wiegen, werden die Ausgangssignale der den Transportbändern 21, 23, 25 zugeordneten Wägemodule 5, 7, 9 mittels eines Schalters (beispielsweise elektronische Schaltung oder mechanischer Schalter) gekoppelt.

Um Fehler durch unerwünschte Lagen des Objektes 31 zu vermeiden, kann der Abstand d der im Beispiel als Transportauflagen 19, 21, 23, 25 ausgebildeten Wägeauflagen zwischen benachbarten Wägeauflagen gering im Vergleich zur Breite einer Wägeauflage bemessen sein (beispielsweise im Bereich von einem cm oder wenigen mm), um das Aufliegen des Objekts 31 an den seitlichen Übergängen und damit ein fehlerhafte Wiegen zu verhindern. Die Fördermittel 27 in Form von beispielsweise Riemen, Ketten, Gurten oder ähnlichem, können hierbei im Vergleich zu den restlichen Teilen der Transportauflagen 19, 21, 23, 25 etwas höher liegen, so dass hierdurch ebenfalls ein Aufliegen des Objektes 31 an den seitlichen Übergängen verhindert werden kann.

Mit der in Fig. 1 dargestellten Wägevorrichtung 1 ist es nunmehr möglich, sowohl kleine Objekte, welche beispielsweise nur auf einer einzelnen Transportvorrichtung 19, 21, 23, oder 25, als auch mittlere und größere Objekte, welche beispielsweise auf zwei, drei oder im Beispiel gar auf vier Transportvorrichtungen zu liegen kommen bzw. befördert werden, korrekt zu wiegen.

Die hierbei erforderliche jeweilige Koppelung der Ausgangssignale der Wägemodule 3, 5, 7, 9 oder einer Auswahl hiervon kann zudem über eine Sensoreinrichtung automatisch erfolgen. Hierfür kann die Sensoreinrichtung beispielsweise einen als elektronische Schaltung (inklusive mittels Software realisierte Schaltung) ausgestatteten Schalter entsprechend ansteuern.

Eine solche Sensoreinrichtung kann beispielsweise als Lichtschranke ausgebildet sein, welche den Spalt bzw. Abstand d benachbarter Transportauflagen 19, 21, 23, 25 überwacht, ob der jeweilige Spalt von einem Objekt überdeckt wurde oder nicht. Selbstverständlich ist es aber auch denkbar, ein zu wiegendes Objekt 31 mittels einer Kamera und entsprechender Auswertung (Bilderfassung) und damit dessen Lage zu erfassen. Auch ist es denkbar die jeweiligen Wägesignale entsprechend auszuwerten und in Abhängigkeit von dem Vorliegen eines Mindestsignals die jeweiligen eigenständigen Wägezellen bzw. Wägemodule zu koppeln.

Weiterhin kann die Sensoreinrichtung auch in einer Produktionslinie vor der Wägevorrichtung 1, beispielsweise bei einer Schneidvorrichtung angeordnet sein, wobei es hier sogar denkbar ist, das Objekt bzw. dessen Abmessungen vor dem Schneidvorgang, beispielsweise in einer Halterung, zu ermitteln und auf diese Weise die Abmessung des geschnittenen Objekts, beispielsweise der Wurst, und dessen spätere Lage auf der Transportvorrichtung 19,21,23,25 zu ermitteln.

Selbstverständlich ist das erfindungsgemäße Verfahren und die erfindungsgemäße Vorrichtung nicht auf das dargestellte Ausführungsbeispiel beschränkt, sondern kann für beliebige zu wiegende Objekte, welche relativ zu einer Wägevorrichtung bewegbar sind oder bewegt werden und während (im Durchlauf) oder zwischen der Bewegung (Start und Stop Betrieb), also selbsttätig gewogen werden sollen, angewendet werden. So ist es denkbar, das erfindungsgemäße Verfahren und die erfindungsgemäße Vorrichtung nicht nur im Lebensmittelbereich zum Transportieren und Wiegen von beispielsweise Wurst, Käse, Brotscheiben, etc. anzuwenden, sondern auch zum Transportieren und Wiegen von in größerer Stückzahl vorkommender Objekte wie Schrauben, Bolzen, Kisten, Briefe etc. in beliebiger Größe.

## Patentansprüche

1. Verfahren zum Wiegen wenigstens eines relativ zu mehreren Wägezellen (3, 5, 7, 9) entlang einer Transportrichtung (T) bewegbaren oder bewegten Objekts (31),
wobei
a) die mehreren Wägezellen (3, 5, 7, 9) jeweils eigenständig ausgebildet sind und im Wesentlichen nebeneinander quer zur Transportrichtung (T) angeordnet werden,
b) jede Wägezelle mechanisch mit jeweils einer Transportvorrichtung (19, 21,23, 25) gekoppelt wird, wobei die jeweilige Transportvorrichtung (19, 21, 23, 25) derart ausgebildet ist, um wenigstens einen Teil eines Objekts in Transport Richtung (T) zu bewegen,
c) jede jeweilige Wägezelle ein Wägesignal beim Wiegen des wenigstens einen Objekts erzeugt, während das Objekt wenigstens teilweise auf der mit der jeweiligen Wägezelle gekoppelten Transportvorrichtung (19, 21,23, 25) aufliegt, und
d) wobei in Abhängigkeit der Größe und/oder Lage des Objekts (31) eine Auswahl der entstehenden Signale der jeweils das Objekt (31) erfassenden Wägezellen (3, 5, 7, 9) für das Koppeln getroffen wird und
e) die Auswahl der zu koppelnden Signale automatisch mittels einer optischen, mechanischen oder elektronischen Sensoreinrichtung erfolgt, indem diese Größe und/oder Lage des zu wiegenden Objekts mittels dieser Sensoreinrichtung erfasst werden, oder die Auswahl der zu koppelnden Signale automatisch in Abhängigkeit eines dem zu wiegenden Objekt zugeordneten Datensatzes eines Produktdatenspeichers getroffen wird.

2. Verfahren nach Anspruch 1, **dadurch gekennzeichnet, dass** die Wägesignale mittels einer Auswerteeinrichtung gekoppelt werden.

3. Verfahren nach einem der vorhergehenden Ansprüche, **dadurch gekennzeichnet, dass** das Koppeln durch Summieren oder Integration erfolgt.

4. Wägevorrichtung zur Durchführung des Verfahrens nach einem der vorhergehenden Ansprüche, mit einer Transportvorrichtung (19, 21, 23, 25) zum Wiegen wenigstens eines relativ zur Wägevorrichtung (1) entlang einer Transportrichtung (T) bewegbaren oder bewegten Objekts (31),
wobei
a) die Vorrichtung (1) mehrere im Wesentlichen nebeneinander quer zur Transportrichtung (T) angeordnete jeweils eigenständige Wägezellen (3, 5, 7, 9) aufweist,
b) jede Wägezelle mechanisch mit jeweils einer der Transportvorrichtungen (19, 21,23, 25) gekoppelt ist, wobei die jeweilige Transportvorrichtung (19, 21,23, 25) derart ausgebildet ist, um wenigstens einen Teil eines Objekts in Transportrichtung (T) zu bewegen,
c) die jeweilige Transportvorrichtung (19, 21, 23, 25) derart ausgebildet ist, dass jede jeweilige Wägezelle ein Wägesignal beim Wiegen des wenigstens einen Objekts erzeugt, während das Objekt wenigstens teilweise auf der mit der jeweiligen Wägezelle gekoppelten Transportvorrichtung (19, 21,23, 25) aufliegt, und
d) wobei mittels eines Schalters in Abhängigkeit der Größe und/oder Lage eines Objekts (31) eine Auswahl der entstehenden Wägesignale der jeweils das Objekt (31) erfassenden Wägezellen (3, 5, 7, 9) für ein Koppeln der Wägesignale getroffen werden kann und
e) der Schalter in Verbindung mit einer optischen, mechanischen oder elektronischen Sensoreinrichtung steht, mittels welcher diese Größe und/oder Lage des zu wiegenden Objekts erfasst wird, um die Auswahl der zu koppelnden Signale automatisch durchzuführen oder der Schalter derart als elektronische Schaltung ausgebildet ist, um die Auswahl der zu koppelnden Signale automatisch in Abhängigkeit eines dem zu wiegenden Objekt zugeordneten Datensatzes eines Produktdatenspeicher zu treffen.

5. Vorrichtung nach Anspruch 4, **dadurch gekennzeichnet, dass** die Vorrichtung eine Auswerteeinrichtung aufweist, um die Signale miteinander zu koppeln.

## Claims

1. A method for weighing at least one object (31) that can be moved or is moved relative to a plurality of weighing cells (3, 5, 7, 9) along a transport direction (T),
wherein
a) the plurality of weighing cells (3, 5, 7, 9) are each formed independently and are arranged substantially side by side transversely to the transport direction (T),
b) each weighing cell is mechanically coupled to, in each case, one transport device (19, 21, 23, 25), wherein the respective transport device (19, 21, 23, 25) is formed in such a way in order to move at least a portion of an object in the transport direction (T),
c) each respective weighing cell generates a weighing signal when weighing the at least one object whilst the object rests at least in part on the transport device (19, 21, 23, 25) coupled to the respective weighing cell, and
d) wherein as a function of the size and/or position of the object (31) a selection of the resultant signals of the weighing cells (3, 5, 7, 9), detecting the object (31) in each case, is made for the coupling, and
e) the selection of the signals to be coupled is effected automatically by means of an optical, mechanical or electronic sensor device by detecting this size and/or position of the object, which is to be weighed, by means of this sensor device, or the selection of the signals to be coupled is made automatically as a function of a data record of a product-data memory associated with the object that is to be weighed.

2. A method according to claim 1, **characterised in that** the weighing signals are coupled by means of an evaluation device.

3. A method according to one of the preceding claims, **characterised in that** the coupling is effected by summation or integration.

4. A weighing device for carrying out the method according to one of the preceding claims, having a transport device (19, 21, 23, 25) for weighing at least one object (31) that can be moved or is moved relative to the weighing device (1) along a transport direction (T),
wherein
a) the device (1) has a plurality of weighing cells (3, 5, 7, 9) which are arranged substantially side by side transversely to the transport direction (T) and are independent in each case,
b) each weighing cell is mechanically coupled to, in each case, one of the transport devices (19, 21, 23, 25), wherein the respective transport device (19, 21, 23, 25) is formed in such a way in order to move at least a portion of an object in the transport direction (T),
c) the respective transport device (19, 21, 23, 25) is formed in such a way that each respective weighing cell generates a weighing signal when weighing the at least one object whilst the object rests at least in part on the transport device (19, 21, 23, 25) coupled to the respective weighing cell, and
d) wherein as a function of the size and/or position of an object (31) a selection of the resultant weighing signals of the weighing cells (3, 5, 7, 9), detecting the object (31) in each case, can be made for a coupling of the weighing signals by means of a switch, and
e) the switch communicates with an optical, mechanical or electronic sensor device, by means of which this size and/or position of the object to be weighed are/is detected, in order to carry out the selection of the signals, which are to be coupled, automatically, or the switch is formed as an electronic switch in order to make the selection of the signals, which are to be coupled, automatically as a function of a data record of a product-data memory associated with the object that is to be weighed.

5. A device according to claim 4, **characterised in that** the device has an evaluation device in order to couple the signals with each other.

## Revendications

1. Procédé de pesage d'au moins un objet (31) déplacé ou pouvant être déplacé par rapport à plusieurs cellules de pesage (3, 5, 7, 9) le long d'une direction de transport (T),
a) les plusieurs cellules de pesage (3, 5, 7, 9) étant conçues de manière autonome et étant globalement juxtaposées transversalement par rapport à la direction de transport (T),
b) chaque cellule de pesage étant couplée mécaniquement avec un dispositif de transport (19, 21, 23, 25), le dispositif de transport (19, 21, 23, 25) étant conçu de façon à déplacer au moins une partie d'un objet dans la direction de transport (T),
c) chaque cellule de pesage générant un signal de pesage lors de la pesée de l'au moins un objet pendant que l'objet repose au moins partiellement sur le dispositif de transport (19, 21, 23, 25) couplé à la cellule de pesage correspondante, et
d) en fonction de la taille et/ou de la position de l'objet (31), une sélection des signaux générés par les cellules de pesage (3, 5, 7, 9) détectant l'objet (31) étant effectuée pour le couplage et
e) la sélection des signaux à coupler étant effectuée automatiquement au moyen d'un dispositif de capteur optique, mécanique ou électronique, en mesurant cette taille et/ou position de l'objet à peser au moyen de ce dispositif de capteur, ou la sélection des signaux à coupler étant effectuée automatiquement en fonction d'un ensemble de données d'une mémoire de données de produits correspondant à l'objet à peser.

2. Procédé selon la revendication 1, **caractérisé en ce que** les signaux de pesage sont couplés au moyen d'un dispositif d'analyse.

3. Procédé selon l'une des revendications précédentes, **caractérisé en ce que** le couplage est effectué par une somme ou une intégration.

4. Dispositif de pesage pour la réalisation du procédé selon l'une des revendications précédentes, avec un dispositif de transport (19, 21, 23, 25) pour le pesage d'au moins un objet (31) déplacé ou pouvant être déplacé par rapport au dispositif de pesage (1) le long d'un dispositif de transport (T),
a) le dispositif (1) comprenant plusieurs cellules de pesage (3, 5, 7, 9) conçues de manière autonome et juxtaposées globalement transversalement à la direction de transport (T),
b) chaque cellule de pesage étant couplée mécaniquement avec un des dispositifs de transport (19, 21, 23, 25), le dispositif de transport (19, 21, 23, 25) correspondant étant conçu pour déplacer au moins une partie d'un objet dans la direction de transport (T),
c) le dispositif de transport (19, 21, 23, 25) correspondant étant conçu de façon à ce que chaque cellule de pesage génère un signal de pesage lors de la pesée de l'au moins un objet, pendant que l'objet repose au moins partiellement sur le dispositif de transport (19, 21, 23, 25) couplé avec la cellule de pesage correspondante, et
d) à l'aide d'un interrupteur, en fonction de la taille et/ou de la position d'un objet (31), une sélection des signaux de pesage générés par les cellules de pesage (3, 5, 7, 9) détectant l'objet (31) pouvant être effectuée pour un couplage des signaux de pesage et
e) l'interrupteur étant relié avec un dispositif de capteur optique, mécanique ou électronique, au moyen duquel cette taille et/ou position de l'objet à peser est mesurée pour effectuer automatiquement la sélection des signaux à coupler ou l'interrupteur étant conçu comme un circuit électronique afin d'effectuer la sélection des signaux à coupler automatiquement en fonction d'un ensemble de données d'une mémoire de données de produits correspondant à l'objet à peser.

5. Dispositif selon la revendication 4, **caractérisé en ce que** le dispositif comprend un dispositif d'analyse afin de coupler les signaux entre eux.
